# EUROPÄISCHE PATENTSCHRIFT

(11) **EP 1 880 815 B1**
(45) Veröffentlichungstag und Bekanntmachung des Hinweises auf die Patenterteilung: **07.12.2011**
(21) Anmeldenummer: 06015029.9
(22) Anmeldetag: 19.07.2006
(51) Int. Cl.: B27C 3/04, B23B 39/16, B23Q 1/70

(54) **Bohrspindelpatrone für Mehrspindelbohraggregate**
Drill spindle cartridge for a multispindle drill
Cartouche porte broches de forage pour une foreuse multibroche

(43) Veröffentlichungstag der Anmeldung: 23.01.2008
(73) Patentinhaber: Homag Holzbearbeitungssysteme AG, 72296 Schopfloch (DE); Zimmer GmbH, 77866 Rheinau (DE)
(72) Erfinder: Sturm, Gotthilf, 72293 Glatten (DE); Kimmig, Clemens, 77728 Oppenau (DE); Zeller, Christoph, 77756 Hausach (DE)
(74) Vertreter: HOFFMANN EITLE

(56) Entgegenhaltungen:
- DE-A1- 4 114 409
- DE-A1- 10 107 861
- DE-A1- 10 218 291
- DE-A1- 10 252 738
- DE-A1- 19 829 814
- DE-U1- 20 217 499
- FR-A- 2 275 276

## Beschreibung

### Technisches Gebiet

Die Erfindung betrifft ein Mehrspindelbohraggregat zum Bearbeiten von Werkstücken, die im wesentlichen aus Holz, Holzwerkstoffen, Kunststoffen oder dergleichen bestehen, nach dem Oberbegriff von Anspruch 1.

### Stand der Technik

Mehrspindelbohraggregate der eingangs genannten Art sind beispielsweise aus der DE 102 18 291 A und der DE 101 07 861 A1 bekannt und finden seit vielen Jahren auf Bearbeitungszentren und Durchlaufmaschinen ihren Einsatz. Dabei weisen die Aggregate üblicherweise mehrere Spindelpatronen auf, die zwischen einer Ruhe- und einer Arbeitsstellung verfahrbar sind und in der Arbeitsstellung über eine Festsetzeinrichtung arretierbar sind. Aufgrund des komplexen Aufbaus der Spindelpatronen und der Funktionalität, die in den Systemen integriert ist, werden die Gehäuse der Mehrspindelbohraggregate aus mehreren Teilen (sog. "Decks") aufgebaut.

Dies bedingt, dass die Fügeebenen zwischen den Decks hochgenau gefertigt werden müssen, um die Flucht der Spindeln zu gewährleisten. Außerdem besteht bei diesem Aufbau eine äußere Anschraubfläche der Mehrspindelbohraggregate aus mehreren Einzelflächen. Dabei ist es erforderlich, die Anschraubfläche nach dem Zusammenbau des Mehrspindelbohraggregats nochmals zu bearbeiten, um eine ebene Anschraubfläche zu erzielen.

Die DE 202 17 499 U1 offenbart ein Mehrspindelbohraggregat gemäß dem Oberbegriff des Anspruchs 1 mit einer Einrichtung zum Festsetzen der Spindel, die axial fest mit der Spindelhülse verbunden ist und zum Festsetzen der Spindelpatrone ein Rastelement aufweist.

Die DE 198 29 814 A1 offenbart einen Aufbau für Bohreinheiten, der einstückiges Lagergehäuse für eine Vielzahl von Spindeln vorsieht. Die Bohreinheiten umfassen eine Festsetzeinrichtung und die Spindeln der Bohreinheiten sind gegenüber ihren Spindelhülsen axial verschiebbar.

Die DE 101 07 861 A1 offenbart ein Mehrspindelbohraggregat mit einer Einrichtung zum Festsetzen der Spindel, die axial verschiebbar zur Bohrspindelhülse angeordnet ist. Die Festsetzeinrichtung besitzt ein Klemmstück, das durch Druckluft die Spindel gegenüber der Spindelpatrone festsetzt.

### Darstellung der Erfindung

Es ist daher Aufgabe der vorliegenden Erfindung, ein alternatives Mehrspindelbohraggregat der eingangs genannten Art bereitzustellen, das eine einfache Konstruktion besitzt, leicht herzustellen ist, und eine größe Sicherheit gegenüber einer Beschädigung der Bauteile der Spindelpatrone erzielt.

Diese Aufgabe wird erfindungsgemäß durch eine Spindelpatrone nach dem Anspruch 1 gelöst. Besonders vorteilhafte Weiterbildungen der Erfindung sind in den abhängige Ansprüchen angegeben.

Der Erfindung liegt die Erkenntnis zugrunde, dass es in technischer und wirtschaftlicher Hinsicht vorteilhaft ist, vorn ein einzelnes Gehäuseteil von vornherein mit der gewünschten Genauigkeit herzustellen, anstatt mehrere Gehäuseteile zunächst mit beträchtlichem Genauigkeitsaufwand herzustellen und anschließend noch nachzubearbeiten. Vor diesem Hintergrund ist erfindungsgemäß vorgesehen, dass das Gehäuse ein Hauptgehäuse aufweist, in welchem die Aufnahmen mit den Lager- und Befestigungsstellen für die Bohrspindelpatronen angeordnet sind und das einstückig ausgebildet ist. Auf diese Weise ergibt sich eine deutlich vereinfachte Konstruktion mit verringertem Fertigungsaufwand. Dies gilt insbesondere, wenn das Gehäuse gemäß einer Weiterbildung der Erfindung als Gussteil ausgebildet ist.

Gemäß der Erfindung ist vorgesehen, dass die Bohrspindelpatronen ferner eine Führungshülse, welche die Spindelhülse abschnittsweise umgibt und in Bezug auf die Spindelhülse in Axialrichtung verschiebbar ist, und eine Festsetzeinrichtung zum Festsetzen der Führungshülse in Bezug auf die Spindelhülse umfassen. Dies geschieht mittels eines Formschlusses zwischen der Führungshülse und der Spindelhülse. Hierdurch ergibt sich ein einfacher Aufbau der Bohrspindelpatronen, der leicht in dem Hauptgehäuse eingebaut werden kann, ohne dass das Hauptgehäuse speziell bearbeitet sein muss, so dass die einstückige Ausbildung des Hauptgehäuses besonders einfach und vorteilhaft ist.

Das Verfahren der Spindelpatronen zwischen einer Ruhe- und einer Arbeitsstellung erfolgt in der Regel pneumatisch. Um in der Arbeitsstellung eine stabile Fixierung der Spindelpatronen zu ermöglichen, ist gemäß einer Weiterbildung der Erfindung ist vorgesehen, dass die Festsetzeinrichtung mindestens ein Betätigungselement zum Betätigen der Führungshülse aufweist, das in Grenzen verschiebbar mit der Spindelhülse verbunden ist. Durch den Verzicht auf eine starre Verbindung zwischen Betätigungselement und Spindelhülse wird auch ermöglicht, dass übermäßige Stöße und Belastungen vor Erreichen einer Endposition beseitigt bzw. abgefangen werden können, so dass die Bauteile der Spindelpatrone entlastet werden. Hierdurch verlängert sich die Lebensdauer der Spindelpatrone.

Gemäß der Erfindung ist vorgesehen, dass die Festsetzeinrichtung formschlüssig arbeitet. Hierdurch wird ermöglicht, dass die Spindelhülse in eine feste und präzise Position in Bezug auf die Führungshülse gebracht werden kann, sodass ein präziser Bohrbetrieb erreicht werden kann. Dabei ist es besonders bevorzugt, dass die Festsetzeinrichtung zwangsgeführt arbeitet. Hierunter ist zu verstehen, dass die Festsetzeinrichtung auch dann den Formschluss beibehält, wenn die Kraft, welche die Festsetzeinrichtung in den Formschluss gebracht hat, nicht mehr aufgebracht wird. In diesem Falle ist freilich zum Lösen der Festsetzeinrichtung eine entsprechende Gegenkraft erforderlich, die beispielsweise ebenfalls pneumatisch aufgebracht werden kann.

Das Betätigungselement kann im Rahmen der vorliegenden Erfindung auf unterschiedlichste Weise ausgestaltet sein. Im Hinblick auf eine einfache und stabile Konstruktion sowie auf das Bereitstellen einer großen Druckaufnahmefläche (mit entsprechend niedrigen erforderlichen Pneumatikdrücken) ist es gemäß einer Weiterbildung der Erfindung bevorzugt, dass das Betätigungselement einen Ringkolben aufweist.

Die Verschiebbarkeit des Betätigungselements in Grenzen entlang der Spindelhülse wird gemäß einer Weiterbildung der vorliegenden Erfindung durch zwei Anschläge erreicht, zwischen denen das Betätigungselement verschiebbar ist. Hierdurch ergibt sich ein genau definierter Verschiebebereich. Dabei ist es besonders bevorzugt, dass das Betätigungselement über ein Vorspannelement vorgespannt ist, um ein leichtes Lösen zu ermöglichen. Bei dem Vorspannelement handelt es sich bevorzugt um ein elastisches Element wie beispielsweise eine Feder, obgleich das Vorspannelement auch durch andere Mittel wie beispielsweise Magnetmittel oder dergleichen gefedert sein kann.

Das Betätigen und Festsetzen der Führungshülse durch das Betätigungselement der Festsetzeinrichtung kann im Rahmen der vorliegenden Erfindung auf unterschiedlichste Weise erfolgen. Um jedoch im Zuge einer Axialbewegung einen sicheren und problemlosen Formschluss zu erreichen, ist gemäß einer Weiterbildung der Erfindung vorgesehen, dass das Betätigungselement und/oder die Führungshülse jeweils mindestens eine im Bezug auf die Axialrichtung geneigte Betätigungsfläche aufweisen.

Zur Erzielung des oben diskutierten Formschlusses hat es sich gemäß der Erfindung als vorteilhaft erwiesen, dass die Festsetzeinrichtung mindestens einen an der Führungshülse vorgesehenen Vorsprung und mindestens eine an der Spindelhülse vorgesehene Vertiefung aufweist. Diese Kombination aus Vorsprung und Vertiefung ermöglicht insbesondere in Verbindung mit den oben genannten geneigten Betätigungsflächen einen sanften und sicheren Formschluss, der auch leicht und problemlos wieder aufgehoben werden kann.

Dabei ist zu beachten, dass die Vertiefung und der Vorsprung auch umgekehrt angeordnet sein können.

Um eine noch größere Sicherheit gegenüber einer Beschädigung der Bauteile der Spindelpatrone zu erzielen, ist gemäß der vorliegenden Erfindung vorgesehen, dass der mindestens eine Vorsprung jeweils eine Sollbruchstelle aufweist. Hierdurch wird für die in dem System auftretenden Kräfte eine feste Obergrenze definiert, sodass Beschädigungen der Lager oder sonstiger Bauteile ausgeschlossen werden können und im Falle übermäßiger Kräfte lediglich die mit dem Vorsprung versehene Führungshülse oder gegebenenfalls Spindelhülse ausgetauscht werden muss.

Gemäß einer Weiterbildung der Erfindung ist vorgesehen, dass in jeder Aufnahme ein Zahnrad angeordnet ist, das formschlüssig mit der jeweiligen Spindel verbindbar ist. Im Hinblick auf ein leichtes Einbauen der jeweiligen Bohrspindelpatronen ist gemäß einer Weiterbildung der Erfindung vorgesehen, dass die Spindel an einem ersten Ende eine Werkzeugaufnahme und an einem gegenüberliegenden, zweiten Ende einen von einer Kreisform abweichenden Querschnitt aufweist. Dieser Querschnitt lässt sich problemlos formschlüssig mit dem jeweiligen Zahnrad verbinden.

Die Zahnräder des Mehrspindelbohrgetriebes kämmen dabei bevorzugt jeweils mit mindestens einem benachbarten Zahnrad, sodass sich insgesamt ein Getriebe ergibt, das durch ein einziges Antriebszahnrad angetrieben werden kann.

Gemäß einer Weiterbildung der Erfindung ist ferner vorgesehen, dass die Zahnräder ausschließlich in dem Gehäuse und somit "fliegend" gelagert sind. Auf diese Weise sind keine weiteren Lagerstellen außerhalb des Gehäuses wie beispielsweise in einem Gehäusedeckel oder dergleichen erforderlich, sodass die übrigen Bauteile wie Gehäusedeckel etc. nicht mit hoher Präzision hergestellt werden müssen, sodass sich insgesamt eine einfache und kostengünstige Konstruktion ergibt.

Gemäß einer weiteren Zielrichtung stellt die vorliegende Erfindung eine Bohrspindelpatrone für ein Mehrspindelbohraggregat nach einer der vorhergehenden Ausgestaltungen bereit. Eine derartige Bohrspindelpatrone umfasst erfindungsgemäß eine Spindel, die in einer Spindelhülse axialfest und drehfrei gelagert ist, eine Führungshülse, welche die Spindelhülse abschnittsweise umgibt und in Bezug auf die Spindelhülse in Axialrichtung verschiebbar ist, und eine Festsetzeinrichtung zum Festsetzen der Führungshülse in Bezug auf die Spindelhülse. Diese Bohrspindelpatrone kann problemlos in die jeweilige Aufnahme des Gehäuses eingeführt und dort beispielsweise über die Führungshülse fixiert werden. Durch die Integration der Festsetzeinrichtung in die Bohrspindelpatrone muss bei Beschädigungen derselben nur die Patrone ausgetauscht werden, ohne dass umständliche Arbeiten im inneren des Gehäuses erforderlich sind.

### Kurze Beschreibung der Zeichnungen

- Fig. 1: zeigt schematisch eine Schnittansicht eines Mehrspindel-Bohrgetriebes als Ausführungsform der vorliegenden Erfindung;
- Fig. 2: zeigt schematisch eine vergrößerte Teilansicht aus Fig. 1.

### Ausführliche Beschreibung bevorzugter Ausführungsformen

Bevorzugte Ausführungsformen der vorliegenden Erfindung werden nachfolgend ausführlich unter Bezugnahme auf die begleitenden Zeichnungen beschrieben.

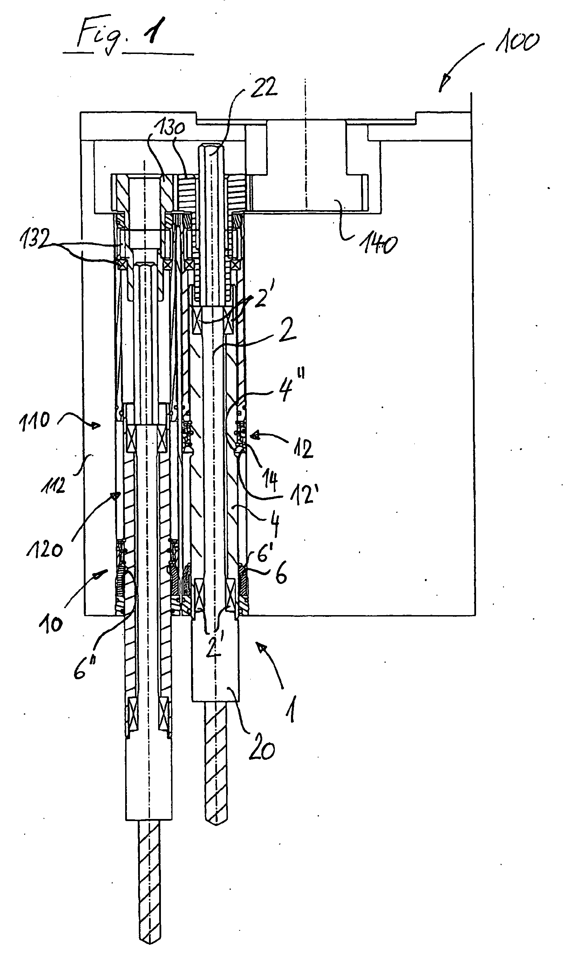

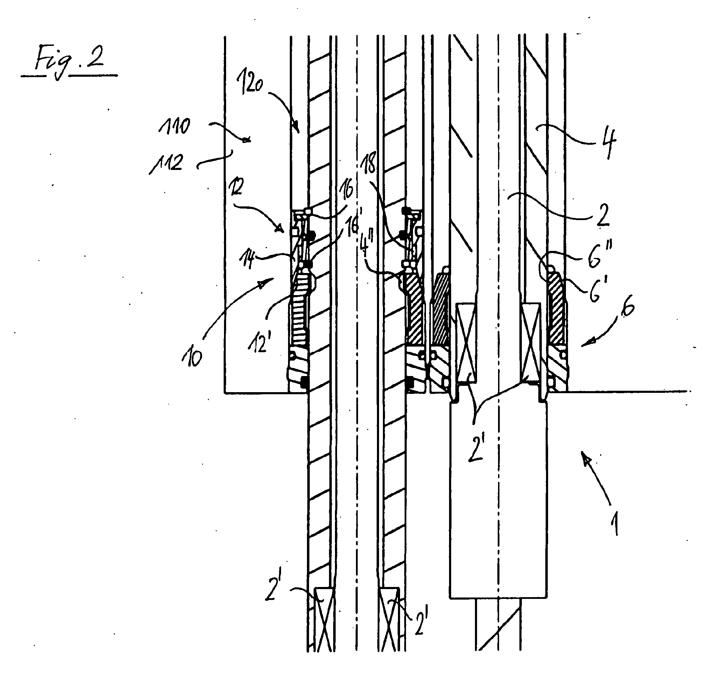

Ein Mehrspindel-Bohraggregat 100 als bevorzugte Ausführungsform der vorliegenden Erfindung ist in den Figuren 1 und 2 in schematischen Schnittansichten dargestellt. Das Mehrspindel-Bohraggregat bzw. Mehrspindel-Bohrgetriebe 100 dient zum Bearbeiten (Bohren) von Werkstücken, die im Wesentlichen aus Holz, Holzwerkstoffen, Kunststoffen oder dergleichen bestehen, wie sie beispielsweise im Bereich der Möbel- und Küchenindustrie häufig zum Einsatz kommen.

Das Mehrspindel-Bohrgetriebe 100 besitzt ein Gehäuse 110 mit einem Hauptgehäuse 112, das in der vorliegenden Ausführungsform einstückig als Gussteil ausgebildet ist. In dem Gehäuse ist eine Mehrzahl von Aufnahmen 120 für Bohrspindelpatronen vorgesehen, wobei in jeder Aufnahme 120 ein Zahnrad 130 derart angeordnet ist, dass es über Lager 132 ausschließlich in dem Hauptgehäuse 112 gelagert ist. Dabei sind die Zahnräder 130 derart angeordnet, dass jedes Zahnrad mit mindestens einem benachbarten Zahnrad kämmt, sodass die Zahnräder durch ein einzelnes Antriebszahnrad 140 angetrieben werden können. Ferner besitzen die Zahnräder 130 einen inneren Durchgangsquerschnitt, der formschlüssig mit einer Spindel 2 verbindbar ist und zu diesem Zweck einen von einer Kreisform abweichenden Querschnitt aufweist.

Das Mehrspindel-Bohraggregat 100 umfasst in der vorliegenden Ausführungsform ferner zwei erfindungsgemäße Bohrspindelpatronen 1, die in ihrer Gesamtheit in Fig. 1 am besten zu erkennen sind. Die Bohrspindelpatronen 1 besitzen jeweils eine Spindel 2, die in einer Spindelhülse 4 über Lager 2' axialfest und drehfrei gelagert ist. Ferner ist eine Führungshülse 6 vorgesehen, welche die Spindelhülse 4 abschnittsweise derart umgibt, dass sie in Bezug auf die Spindelhülse 4 in Axialrichtung der Spindel 2 verschiebbar ist. Wie in Fig. 1 zu erkennen ist, ist die Führungshülse 6 ringartig ausgebildet und besitzt in Axialrichtung deutlich geringere Abmessungen als die Spindelhülse 4.

Ferner umfasst jede Bohrspindelpatrone 1 eine Festsetzeinrichtung 10 zum Festsetzen der Führungshülse 6 in Bezug auf die Spindelhülse 4, die in der vorliegenden Ausführungsform formschlüssig und zwangsgeführt arbeitet. Dabei weist die Festsetzeinrichtung 10 jeweils ein Betätigungselement 12 zum Betätigen der Führungshülse 6 auf, das zwischen zwei Anschlägen 16, 16' entlang der Spindelhülse 4 verschiebbar und über eine Feder 18 in Richtung weg von der Führungshülse 6 vorgespannt ist. Dabei ist das Betätigungselement 12 in der vorliegenden Ausführungsform als Ringkolben 14 ausgebildet.

Das Betätigungselement 12 und die Führungshülse 6 besitzen jeweils eine in Bezug auf die Axialrichtung geneigte Betätigungsfläche 12', 6', die einander zugewandt sind. Ferner ist an der Führungshülse 6 ein Vorsprung 6" vorgesehen, der derart ausgelegt ist, um formschlüssig in eine an der Spindelhülse 4 vorgesehene Vertiefung 4" einzugreifen. Obgleich in den Figuren nicht gezeigt, ist es jedoch ebenso möglich, an der Führungshülse eine Vertiefung und an der Spindelhülse einen entsprechenden Vorsprung vorzusehen, um den Formschluss zu erzielen. Obgleich in den Figuren ebenso nicht gezeigt, weist der Vorsprung 6" eine Sollbruchstelle auf, die ein Abtrennen des Vorsprungs 6" von der Führungshülse 6 bei einer vorbestimmten Belastung bewirkt. Ferner kann die Führungshülse im Rahmen der vorliegenden Erfindung einteilig oder ggf. mehrteilig ausgebildet sein, beispielsweise indem der mit der Betätigungsfläche 6' und dem Vorsprung 6" versehene Abschnitt krallenartig an einer Grundhülse angebracht ist.

Weiterhin weist die Bohrspindelpatrone 1 an einem ersten Ende (unten in Fig. 1) eine Werkzeugaufnahme 20 auf, in die beispielsweise Bohrer oder sonstige Werkzeuge eingewechselt werden können. An dem gegenüberliegenden, zweiten Ende der Bohrspindelpatrone ist die Spindel 2 mit einem von einer Kreisform abweichenden Querschnitt 22 versehen, der beispielsweise durch ein Sechskanthalbzeug gebildet sein kann.

Die vorstehend beschriebenen Bohrspindelpatronen 1 bilden eine eigenständige Einheit, die als Ganzes problemlos in eine jeweilige Aufnahme 120 des Gehäuses 110 bzw. Hauptgehäuses 112 des Mehrspindel-Bohrgetriebes 100 eingewechselt werden kann. Zu diesem Zweck wird die jeweilige Bohrspindelpatrone 1 mit dem zweiten Ende 22 in die jeweilige Aufnahme 120 derart eingeführt, dass der Querschnitt 22 formschlüssig in die innere Durchgangsbohrung des jeweiligen Zahnrades 130 eingreift. Anschließend wird die Führungshülse 6 zumindest in einer Richtung in der jeweiligen Aufnahme 120 fixiert, beispielsweise durch Klemmschrauben oder dergleichen. Durch diesen einfachen Einbauvorgang ist die Bohrspindelpatrone 1 bereits betriebsfertig in dem Gehäuse 110 eingebaut.

Im eingebauten Zustand kann die Spindelhülse 4 in Bezug auf das Gehäuse 110 zwischen zwei Endpositionen verschoben bzw. verfahren werden, die in Fig. 1 schematisch gezeigt sind. Rechts in Fig. 1 befindet sich die Spindelhülse 4 in einer zurückgezogenen Ruheposition, während sich die Spindelhülse 4 links in Fig. 1 in einer Arbeitsposition befindet. Dabei erfolgt das Verfahren der Spindelhülse 4 innerhalb des Gehäuses 110 mittels Druckluft, welche über nicht näher gezeigte Anschlüsse in die zwischen Spindelhülse 4 und Aufnahme 120 gebildeten Hohlräume zugeführt wird. Beim Verfahren der Spindelhülse 4 von der Ruheposition in die Arbeitsposition wird das Betätigungselement 12 mittels Druckfluid entlang der Aufnahme 120 nach unten gefahren, bis der untere Anschlag 16' bzw. ein anderer geeigneter, an der Spindelhülse 4 vorgesehener Anschlag auf die Führungshülse 6 trifft. Ein Verschieben der Spindelhülse 4 ist nun nicht mehr möglich, sodass die Spindelhülse 4 ihre Endposition erreicht hat. Anschließend wird jedoch das federnd gelagerte Betätigungselement 12 durch die weiterhin wirkende Kraft der Druckluft entgegen der Federkraft zu der Führungshülse 6 hin verschoben, wobei im Zuge dieser Bewegung die geneigten Betätigungsflächen 12' und 6' aneinander entlang gleiten. Hierdurch wird der Vorsprung 6" der Führungshülse 6 mit der Vertiefung 4" der Spindelhülse 4 in Eingriff gebracht, sodass die Spindelhülse 4 in ihrer Position (Arbeitsposition) festgesetzt ist.

Nach Ende einer Bearbeitung wird zum Zurückfahren der jeweiligen Spindelhülse 4 Druckfluid in den Bereich unterhalb des Betätigungselements geführt, sodass dieses aus dem Kontakt mit der Führungshülse gelöst wird und zunächst in Verbindung mit der Federkraft des Vorspannelements 18 zu dem oberen Anschlag 16 hingefahren wird, um anschließend die gesamte Spindelhülse wieder in die Ruheposition zurück zu fahren.

Durch das Vorsehen einer Verriegelung in der Arbeitsposition lassen sich während des Arbeitsbetriebes der Bohrspindelpatrone hohe Haltekräfte erzielen, die rein pneumatisch nicht erreicht werden können.

## Patentansprüche

1. Mehrspindelbohraggregat (100) zum Bearbeiten von Werkstücken, die im Wesentlichen aus Holz, Holzwerkstoffen, Kunststoffen oder dergleichen bestehen, mit:
einer Mehrzahl von Bohrspindelpatronen, die jeweils eine Spindel (2), die in einer Spindelhülse (4) axialfest und drehfrei gelagert ist, eine Führungshülse (6), welche die Spindelhülse (4) abschnittsweise umgibt und in Bezug auf die Spindelhülse (4) in Axialrichtung verschiebbar ist, und eine Festsetzeinrichtung (10) zum Festsetzen der Führungshülse (6) in Bezug auf die Spindelhülse (4) mittels Formschlusses zwischen Führungshülse und Spindelhülse aufweisen;
einem Gehäuse (110) mit einem Hauptgehäuse (112), in dem eine Mehrzahl von Aufnahmen (120) mit Lager- und Befestigungsstellen (132) für Bohrspindelpatronen angeordnet sind, in denen die Bohrspindelpatronen aufgenommenen sind, und wobei das Hauptgehäuse (112) einstückig ausgebildet ist;
wobei die Festsetzeinrichtung (10) mindestens einen an der Führungshülse (6) vorgesehenen Vorsprung (6'') und mindestens eine an der Spindelhülse (4) vorgesehene Vertiefung (4'') aufweist, oder
die Festsetzeinrichtung mindestens einen an der Spindelhülse vorgesehenen Vorsprung und mindestens eine an der Führungshülse vorgesehene Vertiefung aufweist **dadurch gekennzeichnet, dass** der Vorsprung (6'') eine Sollbruchstelle aufweist.

2. Mehrspindelbohraggregat nach Anspruch 1, **dadurch gekennzeichnet, dass** das Hauptgehäuse (112) als Gussteil ausgebildet ist.

3. Mehrspindelbohraggregat nach Anspruch 1 oder 2, **dadurch gekennzeichnet, dass** die Festsetzeinrichtung (10) mindestens ein Betätigungselement (12) zum Betätigen der Führungshülse (6) aufweist, das in Grenzen verschiebbar mit der Spindelhülse (4) verbunden ist.

4. Mehrspindelbohraggregat nach Anspruch 3, **dadurch gekennzeichnet, dass** die Festsetzeinrichtung (10) formschlüssig und bevorzugt zwangsgeführt arbeitet.

5. Mehrspindelbohraggregat nach Anspruch 3 oder 4, **dadurch gekennzeichnet, dass** das Betätigungselement (12) einen Ringkolben (14) aufweist.

6. Mehrspindelbohraggregat nach Anspruch 5, **dadurch gekennzeichnet, dass** das Betätigungselement (12) an der Spindelhülse (4) zwischen zwei Anschlägen (16, 16') verschiebbar und bevorzugt über ein Vorspannelement (18), insbesondere elastisches Element, vorgespannt ist.

7. Mehrspindelbohraggregat nach einem der Ansprüche 1 bis 6, **dadurch gekennzeichnet, dass** das Betätigungselement (12) und/oder die Führungshülse (6) jeweils mindestens eine in Bezug auf die Axialrichtung geneigte Betätigungsfläche (12', 6') aufweisen.

8. Mehrspindelbohraggregat nach einem der vorhergehenden Ansprüche, **dadurch gekennzeichnet, dass** die Spindel (2) an einem ersten Ende eine Werkzeugaufnahme (20) und an einem gegenüberliegenden, zweiten Ende einen von einer Kreisform abweichenden Querschnitt (22) aufweist.

9. Mehrspindelbohraggregat nach einem der vorhergehenden Ansprüche, **dadurch gekennzeichnet, dass** in jeder Aufnahme (120) ein Zahnrad (130) angeordnet ist, das formschlüssig mit der jeweiligen Spindel (2) verbunden ist.

10. Mehrspindelbohraggregat nach Anspruch 9, **dadurch gekennzeichnet, dass** die Zahnräder (130) jeweils mit mindestens einem benachbarten Zahnrad (130) kämmen.

11. Mehrspindelbohraggregat nach einem der Ansprüche 8 bis 10, **dadurch gekennzeichnet, dass** die Zahnräder (130) ausschließlich in dem Hauptgehäuse (112) gelagert sind.

12. Bohrspindelpatrone für ein Mehrspindelbohraggregat nach einem der vorhergehenden Ansprüche, umfassend:
eine Spindel (2), die in einer Spindelhülse (4) axialfest und drehfrei gelagert ist;
eine Führungshülse (6), welche die Spindelhülse (4) abschnittsweise umgibt und in Bezug auf die Spindelhülse (4) in Axialrichtung verschiebbar ist; und
eine Festsetzeinrichtung (10) zum Festsetzen der Führungshülse (6) in Bezug auf die Spindelhülse (4) mittels Formschlusses zwischen Führungshülse und Spindelhülse, wobei die Festsetzeinrichtung (10) ein Betätigungselement (12) zum Betätigen der Führungshülse aufweist;
wobei die Festsetzeinrichtung (10) mindestens einen an der Führungshülse (6) vorgesehenen Vorsprung (6") und mindestens eine an der Spindelhülse (4) vorgesehene Vertiefung (4'') aufweist, oder
die Festsetzeinrichtung mindestens einen an der Spindelhülse vorgesehenen Vorsprung und mindestens eine an der Führungshülse vorgesehene Vertiefung aufweist
**dadurch gekennzeichnet, dass** der Vorsprung (6'') eine Sollbruchstelle aufweist.

## Claims

1. Multi-spindle drilling unit (100) for machining workpieces which are essentially made of wood, derived timber products, plastics or the like, having:
a plurality of drilling spindle cartridges which in each case have a spindle (2) which is mounted in a spindle sleeve (4) so as to be axially fixed and freely rotatable, a guide sleeve (6) which surrounds the spindle sleeve (4) in one section and is slidable in the axial direction in relation to the spindle sleeve (4), and a fixing device (10) for fixing the guide sleeve (6) in relation to the spindle sleeve (4) by form-locking between guide sleeve and spindle sleeve;
a housing (110) having a main housing (112) in which are arranged a plurality of receptacles (120) with mounting and fastening points (132) for drilling spindle cartridges, in which the drilling spindle cartridges are received, and wherein the main housing (112) is constructed in one piece;
wherein the fixing device (10) has at least one projection (6'') provided on the guide sleeve (6) and at least one recess (4'') provided on the spindle sleeve (4), or
the fixing device has at least one projection provided on the spindle sleeve and at least one recess provided on the guide sleeve,
**characterised in that** the projection (6'') has a predetermined breaking point.
**characterised in that** the projection (6'') has a predetermined breaking point.

2. Multi-spindle drilling unit according to claim 1, **characterised in that** the main housing (112) is constructed as a casting.

3. Multi-spindle drilling unit according to claim 1 or 2, **characterised in that** the fixing device (10) has at least one actuating element (12) for actuating the guide sleeve (6), which is connected to the spindle sleeve (4) so as to be slidable within limits.

4. Multi-spindle drilling unit according to claim 3, **characterised in that** the fixing device (10) operates in form-locking and preferably positively driven relationship.

5. Multi-spindle drilling unit according to claim 3 or 4, **characterised in that** the actuating element (12) has an annular piston (14).

6. Multi-spindle drilling unit according to claim 5, **characterised in that** the actuating element (12) is slidable between two stops (16, 16') on the spindle sleeve (4) and preferably pretensioned by means of a pretensioning element (18), in particular elastic element.

7. Multi-spindle drilling unit according to any of claims 1 to 6, **characterised in that** the actuating element (12) and/or the guide sleeve (6) in each case have at least one actuating surface (12', 6') which is inclined in relation to the axial direction.

8. Multi-spindle drilling unit according to any of the preceding claims, **characterised in that** the spindle (2) has a tool receptacle (20) at a first end and a cross-section (22) differing from the circular shape at an opposite, second end.

9. Multi-spindle drilling unit according to any of the preceding claims, **characterised in that** in each receptacle (120) is arranged a gear (130) which is connected to the respective spindle (2) in form-locking relationship.

10. Multi-spindle drilling unit according to claim 9, **characterised in that** the gears (130) in each case mesh with at least one adjacent gear (130).

11. Multi-spindle drilling unit according to any of claims 8 to 10, **characterised in that** the gears (130) are mounted exclusively in the main housing (112).

12. Drilling spindle cartridge for a multi-spindle drilling unit according to any of the preceding claims, comprising:
a spindle (2) which is mounted in a spindle sleeve (4) so as to be axially fixed and freely rotatable;
a guide sleeve (6) which surrounds the spindle sleeve (4) in one section and is slidable in the axial direction in relation to the spindle sleeve (4); and
a fixing device (10) for fixing the guide sleeve (6) in relation to the spindle sleeve (4) by form-locking between guide sleeve and spindle sleeve, wherein the fixing device (10) has an actuating element (12) for actuating the guide sleeve;
wherein the fixing device (10) has at least one projection (6'') provided on the guide sleeve (6) and at least one recess (4'') provided on the spindle sleeve (4), or
the fixing device has at least one projection provided on the spindle sleeve and at least one recess provided on the guide sleeve,
**characterised in that** the projection (6'') has a predetermined breaking point.

## Revendications

1. Foreuse multibroche (100), pour l'usinage de pièces d'oeuvre composées essentiellement de bois, matériaux ligneux, matières synthétiques ou analogue, avec :
une pluralité de cartouches porte broches de forage, présentant chacune une broche (2), montée en palier, de manière axialement fixe et libre en rotation, dans une douille à broche (4), une douille de guidage (6), entourant par tronçons la douille à broche (4) et déplaçable en direction axiale par rapport à la douille à broche (4), et un dispositif de fixation (10), pour la fixation de la douille de guidage (6) par rapport à la douille à broche (4), au moyen d'une liaison à ajustement de formes entre douille de guidage et douille à broche ;
un boîtier (110), avec un boîtier principal (112), dans lequel sont disposés une pluralité de logements (120) avec des emplacements de palier et de fixation (132), pour des cartouches porte broches de forage, dans lesquels les cartouches porte broches de forage sont logées, et le boîtier principal (112) étant réalisé d'une seule pièce ;
le dispositif de fixation (10) présentant au moins une saillie (6"), prévue sur la douille de guidage (6), et au moins une cavité (4"), prévue sur la douille à broche (4), ou
le dispositif de fixation présentant au moins une saillie, prévue sur la douille à broche, et au moins une cavité, prévue sur la douille de guidage,
**caractérisée en ce que** la saillie (6") présente un emplacement destiné à la rupture.

2. Foreuse multibroche selon la revendication 1, **caractérisée en ce que** le boîtier principal (112) est réalisé sous la forme de pièce moulée.

3. Foreuse multibroche selon la revendication 1 ou 2, **caractérisée en ce que** le dispositif de fixation (10) présente au moins un élément d'actionnement (12), pour l'actionnement de la douille de guidage (6), relié, de manière déplaçable dans certaines limites, à la douille à broche (4).

4. Foreuse multibroche selon la revendication 3, **caractérisée en ce que** le dispositif de fixation (10) travaille par ajustement de formes et, de préférence, à guidage forcé.

5. Foreuse multibroche selon la revendication 3 ou 4, **caractérisée en ce que** l'élément d'actionnement (12) présente un piston annulaire (14).

6. Foreuse multibroche selon la revendication 5, **caractérisée en ce que** l'élément d'actionnement (12) est déplaçable entre deux butées (16, 16') sur la douille à broche (4) et est précontraint, de préférence par l'intermédiaire d'un élément de précontrainte (18), en particulier un élément élastique.

7. Foreuse multibroche selon l'une des revendications 1 à 6, **caractérisée en ce que** l'élément d'actionnement (12) et/ou la douille de guidage (6) présentent chacun au moins une face d'actionnement (12', 6') inclinée par rapport à la direction axiale.

8. Foreuse multibroche selon l'une des revendications précédentes, **caractérisée en ce que** la broche (2) présente, sur une première extrémité, un logement à outil (20) et, sur une deuxième extrémité, opposée, une section transversale (22) différant d'une forme circulaire.

9. Foreuse multibroche selon l'une des revendications précédentes, **caractérisée en ce que**, dans chaque logement (120), est disposé une roue dentée (130), reliée, par ajustement de formes, à la broche (2) respective.

10. Foreuse multibroche selon la revendication 9, **caractérisée en ce que** les roues dentées (130) s'engrènent chacune avec au moins une roue dentée (130) voisine.

11. Foreuse multibroche selon l'une des revendications 8 à 10, **caractérisée en ce que** les roues dentées (130) sont montées en palier exclusivement dans le boîtier principal (112).

12. Cartouche porte broches de forage pour foreuse multibroche selon l'une des revendications précédentes, comprenant :
une broche (2), montée en palier, de manière axialement fixe et libre en rotation, dans une douille à broche (4) ;
une douille de guidage (6), entourant par tronçons la douille à broche (4) et déplaçable en direction axiale par rapport à la douille à broche (4) ; et
un dispositif de fixation (10), pour la fixation de la douille de guidage (6) par rapport à la douille à broche (4), au moyen d'une liaison à ajustement de formes entre douille de guidage et douille à broche, le dispositif de fixation (10) présentant un élément d'actionnement (12), pour l'actionnement de la douille de guidage ;
le dispositif de fixation (10) présentant au moins une saillie (6"), prévue sur la douille de guidage (6), et au moins une cavité (4"), prévue sur la douille à broche (4), ou
le dispositif de fixation présentant au moins une saillie, prévue sur la douille à broche, et au moins une cavité, prévue sur la douille de guidage,
**caractérisée en ce que** la saillie (6") présente un emplacement destiné à la rupture.
